Europäisches Patentamt

European Patent Office

Office européen des brevets

(11) Numéro de publication: **0 241 381 B1**

# FASCICULE DE BREVET EUROPEEN

(45) Date de publication de fascicule du brevet: **08.07.92**  (51) Int. Cl.⁵: **H04M 3/36**, G06F 15/74

(21) Numéro de dépôt: **87400805.5**

(22) Date de dépôt: **09.04.87**

(54) **Procédé de compression d'un ensemble d'informations.**

(30) Priorité: **10.04.86 FR 8605139**

(43) Date de publication de la demande:
**14.10.87 Bulletin 87/42**

(45) Mention de la délivrance du brevet:
**08.07.92 Bulletin 92/28**

(84) Etats contractants désignés:
**DE GB**

(56) Documents cités:
**DE-A- 3 128 578**
**FR-A- 2 250 243**

**FREQUENZ, vol. 39, no. 7/8, juillet/août 1985, pages 203-208, Berlin, DE; E. PFANNERSTILL et al.: "Ein Verkehrsdatenerfassungssystem für Schnellstrassen - Objecterkennung und Modellbildung"**

**TENTH INTERNATIONAL TELETRAFFIC CONGRESS, Montréal, 9-15 juin 1983, pages 1-7; J. RUBAS: "Estimation of reference load from daily traffic distributions"**

**NINETH INTERNATIONAL TELETRAFFIC CONGRESS, 17-24 octobre 1979, pages BO-LOTIN 1/5, Palacio de Congresos y Exposi-**

**ciones, Torremolinos, ES; V.A. BOLOTIN et al.: "Characterizing traffic variations"**

(73) Titulaire: **Berruyer, Yves**
**94 Boulevard Gabriel Péri**
**F-92240 Malakoff(FR)**

(72) Inventeur: **Berruyer, Yves**
**94 Boulevard Gabriel Péri**
**F-92240 Malakoff(FR)**

(74) Mandataire: **Mongrédien, André et al**
**c/o BREVATOME 25, rue de Ponthieu**
**F-75008 Paris(FR)**

Rank Xerox (UK) Business Services

## Description

La présente invention a pour objet un procédé de compression d'un ensemble d'informations correspondant à des mesures successives d'une même grandeur physique sur une durée prédéterminée. L'invention concerne toute activité quantifiable variant dans le temps, mesurée régulièrement, et relativement souvent, par exemple toutes les heures.

L'analyse des valeurs successives de la grandeur mesurée, par exemple pour déterminer des cycles journaliers, hebdomadaires ou autres, par un opérateur humain devient rapidement impossible devant le volume des valeurs mesurées. Celles-ci sont donc inexploitables.

Le nombre de grandeurs mesurées est particulièrement important dans un réseau téléphonique. Un réseau téléphonique est composé de noeuds, constitués par des autocommutateurs de transit ou des autocommutateurs d'abonnés, et des liaisons entre ces noeuds, constituées par des faisceaux. Pour une bonne gestion des ressources du réseau, il est important de connaître le taux de charge de chaque élément de ce réseau. Il est donc procédé régulièrement, par exemple toutes les demi-heures ou toutes les heures, à des mesures de trafic sur chaque faisceau et de mesures de trafic des autocommutateurs.

On pourra se reporter à l'article intitulé "Estimation of Reference Load from Daily Traffic Distributions" du "Tenth International Teletraffic Congress", Montreal 9-15 juin 1983, de J. RUBAS, pour apprécier les problèmes liés au trafic d'un réseau de télécommunication.

Plus précisément, pour un autocommutateur d'abonné, on mesure le trafic de départ (correspondant aux appels des abonnés reliés à cet autocommutateur), le trafic d'arrivée (correspondant à des appels destinés à des abonnés reliés à l'autocommutateur), le trafic interne (correspondant à un appel téléphonique entre deux abonnés de l'autocommutateur) ou autre. Les données mesurées sont mémorisées dans un ordinateur et sont éditées soit périodiquement, soit à la demande.

L'édition de l'ensemble des données mesurées sur un seul autocommutateur pendant un mois représente une centaine de pages. Il s'agit à l'évidence d'un volume de données trop important pour qu'un opérateur humain puisse exploiter ces données. Il est donc nécessaire de comprimer les données mémorisées avant de les présenter à un opérateur humain.

Dans le cas particulier des observations de trafic dans un réseau téléphonique, on utilise, selon l'art connu, un procédé de filtrage grossier fondé sur le calcul d'une valeur représentative mensuelle et d'une valeur représentative annuelle de chaque grandeur mesurée. Ces valeurs permettent une compression très importante des données mesurées mais interdisent toute analyse fine d'une grandeur mesurée, par exemple la recherche de cycles journaliers ou hebdomadaires.

L'invention a pour but de permettre une représentation synthétique d'un ensemble de données représentant des valeurs successives d'une grandeur évoluant dans le temps afin de rendre possible l'exploitation de ces données par un opérateur humain et de faciliter la prise de décision humaine, par exemple, dans le cas d'un autocommutateur de transit d'un réseau téléphonique, pour gérer la table des acheminements dans cet autocommutateur.

Selon l'invention, la compression d'un ensemble d'informations constituées de n mesures successives sur une première durée prédéterminée d'un signal représentatif du niveau de trafic en un point d'un réseau de télécommunications, l'ensemble desdites mesures étant appelé profil mesuré, consiste, d'une part, à créer une bibliothèque de modèles de profils, chaque modèle de profil comprenant n valeurs dites valeurs de référence, et, d'autre part, à normaliser le profil mesuré a comparer ledit profil mesuré à chaque modèle de profil pour déterminer une distance entre ledit profil mesuré et chaque modèle de profil, à comparer ladite distance à un premier seuil, et à remplacer ledit profil mesuré par un couple de valeurs, la première valeur contenant une référence à un modèle de profil pour lequel la distance entre ce modèle de profil et le profil mesuré est inférieure audit seuil et la seconde valeur étant représentative du rapport des amplitudes du profil mesuré et dudit modèle de profil.

L'invention s'applique au traitement d'un signal représentatif d'un niveau de trafic en un point d'un réseau de données. Il est donc nécessaire de comprimer les données mémorisées avant de les présenter à un opérateur humain. télécommunications. Il s'applique donc au réseau téléphonique, mais aussi aux réseaux de transmission de données ou de transmission de signaux vidéo. Le signal analysé peut être le trafic dans un noeud du réseau, le trafic sur un faisceau reliant deux noeuds, le trafic sur un sous-ensemble du faisceau correspondant à une direction donnée, la longueur d'une file d'attente entre processus dans un circuit de traitement d'un noeud, et plus généralement tout signal qui représente un niveau de trafic en un point quelconque d'un réseau de télécommunications.

Le taux de compression obtenu peut être très important. Par exemple, pour une grandeur physique mesurée toutes les heures sur une durée de 24 heures, le procédé de compression de l'invention permet de remplacer 24 mesures par deux valeurs.

De manière préférée, chaque modèle de profil de la bibliothèque est normalisé et chaque profil mesuré est normalisé de la même manière avant d'être comparé aux modèles de profil.

Selon une caractéristique secondaire, pour tous les profils normalisés (mesurés ou modèles), un même niveau normalisé est affecté à la plus forte valeur du profil non-normalisé.

Selon une autre caractéristique secondaire, pour tous les profils normalisés (mesurés ou modèles), un même niveau normalisé est affecté à une valeur de rang déterminé des valeurs successives formant le profil non-normalisé.

De manière préférée, la seconde valeur du couple de valeurs remplaçant un profil mesuré est égale au poids du profil mesuré avant normalisation, c'est-à-dire à la somme des valeurs mesurées.

Selon une variante, la seconde valeur du couple de valeurs remplaçant un profil mesuré est égale au poids d'une valeur de rang déterminé des valeurs successives formant le profil mesuré.

L'invention concerne également la compression d'un ensemble d'informations représentées par des mesures successives d'une même grandeur physique sur une seconde durée prédéterminée, multiple de la première durée prédéterminée. Ces première et seconde durées prédéterminées sont par exemple respectivement égales à un jour et à une semaine.

La compression du profil mesuré sur la seconde durée prédéterminée se fait en remplaçant ce profil par un couple de valeurs comprenant une première valeur identifiant un modèle de profil pour la seconde durée prédéterminée par un ensemble de modèles de profil contenus dans une bibliothèque, et une seconde valeur exprimant un rapport des amplitudes entre ledit profil mesuré et le modèle de profil désigné par la première valeur.

Selon une première variante préférée, un modèle de profil pour la seconde durée prédéterminée est composé de p couples de valeurs, où p est le rapport de durée entre la seconde durée prédéterminée et la première durée prédéterminée, chaque couple étant composé d'un identificateur désignant un modèle de profil pour la première durée prédéterminée et d'une valeur exprimant le poids dudit modèle de profil pour la première durée prédéterminée dans le modèle de profil pour la seconde durée prédéterminée.

Selon une seconde variante préférée, un modèle de profil pour la seconde durée prédéterminée est composé du nom d'un taux suivi, et des p valeurs de ce taux dans chacune des p premières durées prédéterminées. Le taux peut être par exemple la valeur minimum, la valeur maximum, ou autre de la grandeur physique sur la première durée prédéterminée.

Les caractéristiques et avantages de l'invention ressortiront mieux de la description qui va suivre, donnée à titre illustratif mais non limitatif, en référence aux dessins annexés, sur lesquels :

- la figure 1 est un graphe sur lequel sont représentés le profil mesuré correspondant au trafic interne d'un autocommutateur sur une journée, et un modèle de profil, ledit graphe permettant d'évaluer la distance entre le profil mesuré et le modèle de profil,
- la figure 2 est un graphe semblable à celui de la figure 1, dans lequel le profil mesuré correspond au trafic de départ d'un commutateur,
- la figure 3 est un graphe semblable à celui de la figure 1 dans lequel le profil mesuré correspond au trafic d'arrivée d'un autocommutateur, et
- la figure 4 est un graphe semblable à celui de la figure 1 dans lequel le profil mesuré correspond au trafic total d'un autocommutateur.

D'une manière générale, le procédé de l'invention consiste à remplacer un volume de données correspondant à des mesures successives d'une même grandeur physique sur une durée prédéterminée, par un nombre de données plus faible sans qu'il y ait une perte sensible d'information. Le procédé consiste principalement à comparer un profil mesuré, c'est-à-dire une suite de mesures effectuées sur une grandeur physique, à des modèles de profil contenus dans une bibliothèque. Ces modèles de profil sont des profils caractéristiques des valeurs de la grandeur physique à analyser. Ils peuvent être créés soit par calcul, soit par des mesures expérimentales sur cette grandeur physique.

La durée prédéterminée associée à un profil dépend de la grandeur physique mesurée et de l'analyse que l'on souhaite en faire. Dans de nombreux cas, cette durée peut être liée à un cycle de l'activité humaine. La durée prédéterminée peut alors être égale à une journée, une semaine, un mois, une saison ou une année. Elle peut également avoir la durée d'un cycle lunaire, solaire, ou autre.

A titre d'exemple, on va considérer le cas d'un autocommutateur d'abonné dans un réseau téléphonique, dans lequel les grandeurs physiques mesurées sont :

- le trafic interne, c'est-à-dire les communications entre deux abonnés reliés à l'autocommutateur,
- le trafic de départ, c'est-à-dire les communications demandées par un abonné relié à l'autocommutateur avec un abonné relié à un autre autocommutateur,
- le trafic arrivée, c'est-à-dire les communications demandées par un abonné relié à un autre autocommutateur avec un abonné relié à l'autocommutateur,

- le trafic total, égal à la somme des trafics internes, de départ et d'arrivée.

A titre d'exemple, on choisit une durée prédéterminée égale à une journée, les mesures étant effectuées toutes les heures.

Le procédé de l'invention consiste à remplacer chaque profil mesuré, c'est-à-dire chaque ensemble de 24 valeurs, par seulement deux valeurs : une valeur pour désigner le modèle de profil d'une bibliothèque de modèle de profil le plus proche du profil mesuré, et une autre valeur pour exprimer un rapport entre les amplitudes des valeurs du profil mesuré et les amplitudes des valeurs de référence du modèle de profil.

La mise en oeuvre du procédé de l'invention nécessite donc la constitution d'une bibliothèque de modèle de profil. Dans le cas de l'exemple choisi, l'amplitude des valeurs mesurées et la distribution des valeurs de forte amplitude dépend, de manière non négligeable, du jour de la mesure. En effet, il est bien clair que le nombre de communications téléphoniques dépend de l'activité économique et n'est donc pas la même par exemple en début de semaine ou pendant le week-end.

La bibliothèque de modèles de profil peut donc avantageusement, dans ce cas, comprendre quelques modèles de profils particuliers pour chaque jour de la semaine. Ces modèles de profils sont par exemple obtenus de manière expérimentale, et par moyennage de plusieurs profils expérimentaux. La bibliothèque de modèles de profils peut également inclure des modèles de profils particuliers pour rendre compte de certains types de journées dont on sait, par expérience, qu'elles conduisent à des profils spécifiques. Il en est ainsi, par exemple, des jours fériés.

La bibliothèque de modèles de profils étant créée, il reste, pour mettre en oeuvre le procédé de l'invention, à définir le critère de distance qui est utilisé pour comparer un profil mesuré au modèle de profil de la bibliothèque. Cette comparaison doit être précédée d'une étape de normalisation du profil mesuré pour que la comparaison ne soit pas faussée par des différences d'échelle entre le profil mesuré et les modèles de profil.

Les modèles de profil sont normalisés lorsqu'ils sont entrés dans la bibliothèque. Cette normalisation consiste par exemple à affecter le niveau 100 à une valeur particulière du profil et à exprimer les autres valeurs de ce profil sous forme de pourcentage de cette valeur.

La valeur particulière choisie peut être la valeur de plus forte amplitude du profil. Dans ce cas, toutes les autres valeurs du profil ont un niveau compris entre 0 et 100. Une variante consiste à choisir, comme valeur particulière, la iième valeur de la suite des valeurs constituant le profil, où i est un nombre prédéterminé compris entre 1 et 24. Avec ce choix, la valeur particulière dont le niveau, par définition, est égal à 100, n'est pas nécessairement la valeur de plus forte amplitude.

Dans la description qui suit du procédé de l'invention, on utilise, à titre d'exemple, cette variante pour normaliser les modèles de profils et les profils mesurés.

La recherche du modèle de profil le plus proche d'un profil mesuré consiste à mesurer la distance entre ledit profil mesuré et chaque modèle de profil selon un critère de distance prédéterminé. De manière générale, la distance entre le profil mesuré et un modèle de profil est une fonction de l'écart entre chaque valeur mesurée du profil mesuré et la valeur de référence correspondante du modèle de profil.

Un critère possible pour décider qu'un profil mesuré est semblable à un modèle de profil est de vérifier que chaque écart est inférieur à un seuil fixé. Celui-ci peut être indépendant de la valeur de référence. Il s'agit alors de vérifier l'inégalité $|VR-VM| \leq T$, où VR est une valeur du modèle de profil, VM la valeur mesurée correspondante et T le seuil. Les variables VR et VM sont normalisées et sont donc comprises, en général, entre 0 et 100. La valeur de T est de quelques unités.

Suivant une variante, le seuil peut être une fonction de la valeur du modèle de profil, par exemple si l'inégalité à vérifier est : $|VR-VM| \leq T \times VR/100$.

Dans les deux inégalités précédentes, la tolérance T est indépendante du niveau de la valeur de référence VR. Mais la gamme 0,100 de valeur pour la valeur de référence VR peut aussi être, par exemple, décomposée en une plage inférieure, une plage intermédiaire et une plage supérieure, la tolérance T étant différente pour chaque plage.

Enfin, la comparaison entre le profil mesuré et un modèle de profil peut tenir compte également de l'écart entre le poids du profil mesuré, c'est-à-dire la somme des valeurs mesurées, et le poids du modèle de profil. Le profil mesuré et le modèle de profil sont semblables si l'écart entre les poids des profils normalisés est inférieur à un seuil prédéterminé.

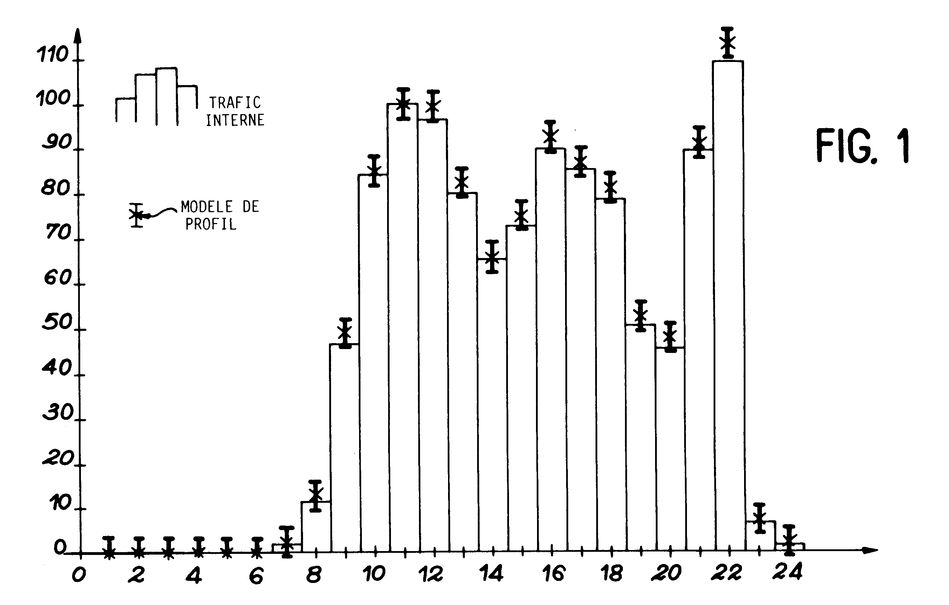

On va maintenant décrire, à titre d'exemple, la compression de données correspondant au trafic d'un autocommutateur, en relation avec les figures 1 à 4. Dans le tableau I, on a indiqué les trafics interne, de départ, d'arrivée et total d'un autocommutateur d'abonnés. Pour chaque trafic, on a noté le nombre de dizièmes d'erlang pendant chaque heure sur une période de 24 heures.

Dans le tableau II, on a noté de la même manière un modèle de profil correspondant à un trafic typique pour un autocommutateur d'abonné. Ce modèle de profil a été normalisé en prenant pour base la 11ème valeur dont le niveau a été fixé à la valeur 100.

Pour qu'une comparaison entre le modèle de profil et chaque profil mesuré puisse être réalisée, chaque profil mesuré a été normalisé de la même manière que le modèle de profil. Le niveau 100 a donc été affecté à la 11ème valeur de chaque profil mesuré. Les profils mesurés normalisés sont représentés sur le tableau III.

Le modèle de profil indiqué dans le tableau II et les profils mesurés normalisés indiqués dans le tableau III sont comparés respectivement sur les figures 1 à 4. Sur chacune de ces figures, chaque valeur mesurée est située par rapport à un intervalle centré sur la valeur de référence correspondante et ayant une largeur de 6 unités. Ainsi, lorsque la valeur mesurée est comprise dans cet intervalle, cela signifie que l'écart entre la valeur mesurée VM et la valeur de référence VR est inférieure, en valeur absolue, à un seuil égal à trois unités.

Dans les exemples représentés sur les figures 1 à 4, ce seuil est constant. Il ne dépend pas du niveau de la valeur de référence.

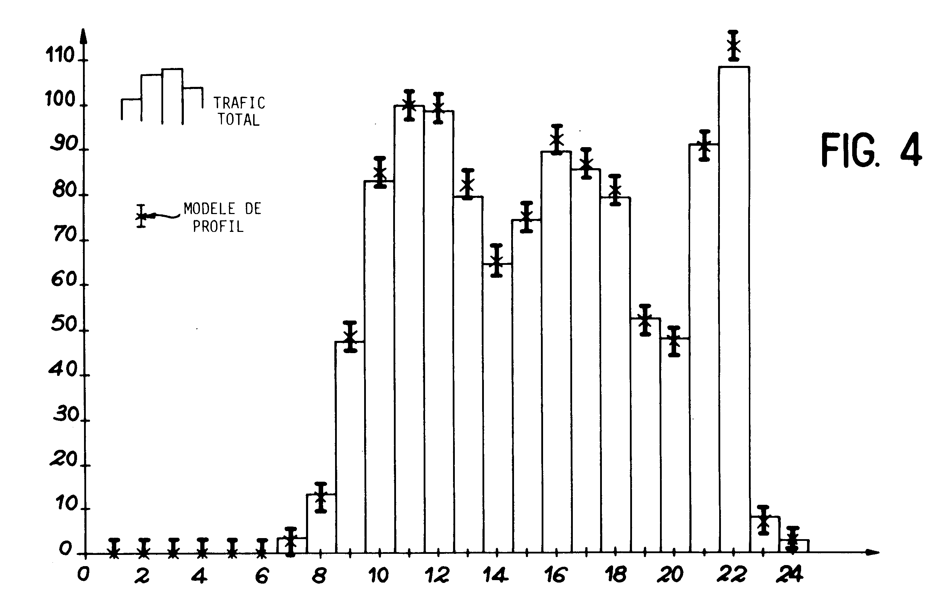

On constate que chaque valeur du profil mesuré normalisé du trafic interne, représenté sur la figure 1, se trouve dans l'intervalle centré sur la valeur de référence correspondante du modèle de profil, à l'exception de la 22ème valeur. Il en est de même pour le profil mesuré normalisé du trafic total représenté sur la figure 4.

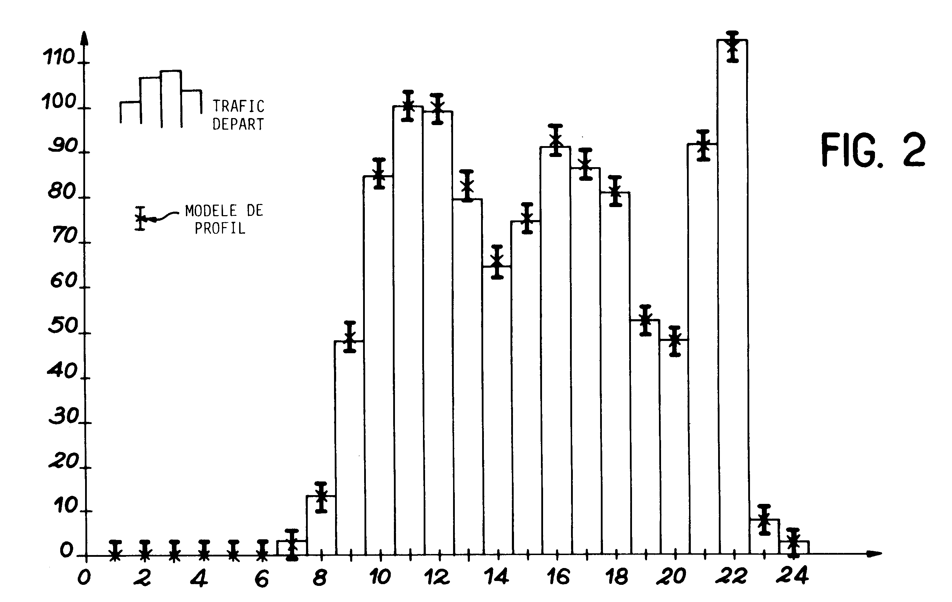

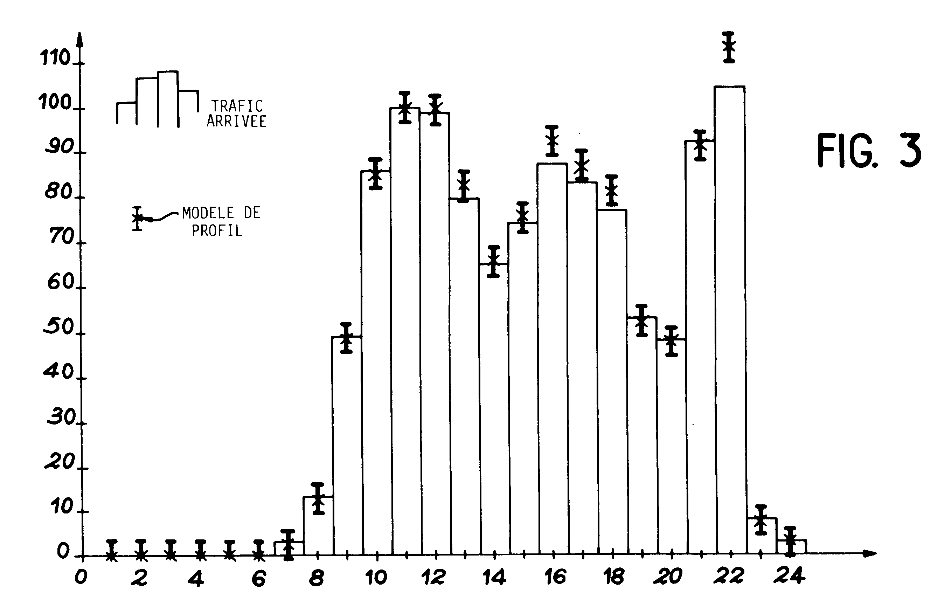

Pour le trafic de départ, dont le profil mesuré est représenté sur la figure 2, chaque valeur mesurée se trouve dans l'intervalle centré sur la valeur de référence correspondante du modèle de profil. Enfin, pour le trafic d'arrivée, représenté sur la figure 3, les 16ème, 17ème, 18ème et 22ème valeurs se trouvant à l'extérieur des intervalles centrés sur les valeurs de référence correspondantes du modèle de profil.

Le profil mesuré correspondant au trafic de départ de l'autocommutateur (figure 2) est conforme au modèle de profil. Il peut donc être codé à l'aide de deux valeurs, l'une notant le numéro de référence du modèle de profil, et l'autre exprimant le rapport entre l'amplitude du profil mesuré non normalisé et l'amplitude du modèle de profil normalisé. Cette autre valeur peut être par exemple le poids du profil mesuré non normalisé, c'est-à-dire la somme des valeurs constituant le profil ; le poids de la valeur du profil mesuré non normalisé correspondant à la valeur prise comme base (c'est-à-dire dont le niveau ou le poids est égal à 100) dans le modèle de profil normalisé ; ou le rapport entre le poids du profil mesuré et le poids du modèle de profil normalisé.

Pour le trafic interne et pour le trafic total de l'autocommucateur, une distorsion entre le profil mesuré normalisé et le modèle de profil n'existe que pour la 22ème valeur. On peut noter que cette valeur est particulière car elle correspond à une pointe de trafic dont le niveau est supérieur à 100.

On peut choisir de tenir compte ou de ne pas tenir compte de ces pointes de trafic lors de la comparaison d'un profil mesuré à un modèle de profil. En effet, on peut considérer que les pointes de trafic correspondent à des événements particuliers qui ne sont pas représentatifs de l'évolution générale de la grandeur mesurée. On peut alors décider que les pointes de trafic ne sont pas prises en compte dans la comparaison du profil mesuré au modèle de profil.

Dans ce cas, les profils mesurés correspondant au trafic interne et au trafic total de l'autocommutateur (figures 1 et 4) sont chacun conformes au modèle de profil. Ils peuvent alors être codés de la même manière que le profil représentant le trafic interne de l'autocommutateur.

Le trafic d'arrivée de l'autocommutateur (figure 3) ne peut pas être codé de la même manière car les valeurs 16, 17 et 18 du profil mesuré ne coïncident pas avec les valeurs correspondantes du modèle de profil. Si cette distorsion existe entre le trafic d'arrivée et chaque modèle de profil de la bibliothèque, la mémorisation du profil mesuré nécessite alors la mémorisation de chaque valeur mesurée.

Cependant, si ce profil mesuré s'écarte notablement des modèles de profil contenus dans la bibliothèque et auxquels il a été comparé, il peut être intéressant de retenir ce profil mesuré comme un nouveau modèle de profil. Il est alors ajouté à la bibliothèque et, par ailleurs, peut être codé de la même manière que les autres profils mesurés.

Dans la description qui précède, la bibliothèque contient des modèles de profil qui correspondent à des profils possibles pour une grandeur physique sur une durée prédéterminée égale à une journée. Ces modèles de profil peuvent être également utilisés avantageusement pour définir des modèles de profil hebdomadaires, ou de manière générale des modèles de profil pour toute durée multiple d'une journée.

Les modèles de profil hebdomadaires peuvent être définis par référence aux modèles de profil journaliers par exemple sous la forme de 7 couples, chaque couple étant constitué d'une référence à un modèle de profil journalier et d'une valeur indiquant le rapport d'amplitude entre le profil journalier contenu dans le profil hebdomadaire et le modèle de profil normalisé contenu dans la bibliothèque. Cette valeur peut par exemple être le poids réel d'une mesure du profil hebdomadaire dont la valeur de référence correspondante dans le modèle de profil normalisé journalier a un niveau égal à 100.

De cette manière, le codage des valeurs mesurées d'une grandeur physique sur une durée d'une semaine peut se ramener seulement deux valeurs : une référence à un modèle de profil hebdomadaire et une valeur représentant le rapport entre les amplitudes du profil hebdomadaire mesuré et du modèle de profil hebdomadaire.

Ceci est réalisé par un codage en deux étapes, la première étape permettant de remplacer chaque profil mesuré journalier par une référence à un modèle de profil journalier et à un poids, la seconde permettant de remplacer l'ensemble des 7 couples journaliers par un couple unique comprenant une référence à un modèle de profil hebdomadaire et un poids.

Les modèles de profils hebdomadaires peuvent également être définis par la valeur journalière, pour chaque jour de la semaine, d'un paramètre prédéterminé. Ce paramètre peut être par exemple la valeur minimale de la grandeur physique au cours de la journée, la valeur maximale de la grandeur physique au cours de la journée, ou autre.

Le modèle de profil hebdomadaire comprend alors 7 valeurs auxquelles s'ajoutent un identificateur pour désigner le paramètre retenu.

La comparaison d'un profil hebdomadaire mesuré à un modèle de profil hebdomadaire consiste,dans ce cas, à comparer, pour chaque jour de la semaine, la valeur du paramètre dans le modèle de profil hebdomadaire et la valeur mesurée de ce paramètre.

L'invention a été décrite en référence à des mesures de trafic sur un autocommutateur faites sur des durées de une journée et de une semaine. Il est bien entendu cependant que l'invention n'est pas liée à la nature de la grandeur physique mesurée non plus qu'à la durée de mesure de cette grandeur.

## TABLEAU I

| heures | trafic interne | trafic départ | trafic arrivée | trafic total |
|--------|------|------|------|------|
| 1 | 0 | 2 | 1 | 3 |
| 2 | 0 | 1 | 1 | 2 |
| 3 | 0 | 0 | 0 | 0 |
| 4 | 1 | 0 | 1 | 2 |
| 5 | 0 | 1 | 1 | 2 |
| 6 | 1 | 12 | 11 | 24 |
| 7 | 4 | 109 | 106 | 219 |
| 8 | 24 | 513 | 491 | 1028 |
| 9 | 96 | 1937 | 1862 | 3895 |
| 10 | 178 | 3422 | 3283 | 6883 |
| 11 | 211 | 4050 | 3847 | 8108 |
| 12 | 203 | 3986 | 3789 | 7978 |
| 13 | 169 | 3239 | 3076 | 6484 |
| 14 | 137 | 2616 | 2501 | 5254 |
| 15 | 154 | 3012 | 2847 | 6013 |
| 16 | 189 | 3720 | 3326 | 7235 |
| 17 | 180 | 3518 | 3207 | 6905 |
| 18 | 166 | 3280 | 2959 | 6405 |
| 19 | 106 | 2117 | 2042 | 4265 |
| 20 | 94 | 1913 | 1838 | 3845 |
| 21 | 188 | 3692 | 3532 | 7412 |
| 22 | 231 | 4527 | 4019 | 8777 |
| 23 | 13 | 295 | 291 | 599 |
| 24 | 3 | 83 | 87 | 173 |
|  |  |  |  |  |
| poids | 2348 | 46045 | 43118 | 91511 |

TABLEAU II

| heure | modèle de profil |
|-------|------------------|
| 1     | 0                |
| 2     | 0                |
| 3     | 0                |
| 4     | 0                |
| 5     | 0                |
| 6     | 0                |
| 7     | 2                |
| 8     | 12               |
| 9     | 48               |
| 10    | 85               |
| 11    | 100              |
| 12    | 99               |
| 13    | 82               |
| 14    | 65               |
| 15    | 75               |
| 16    | 92               |
| 17    | 87               |
| 18    | 81               |
| 19    | 52               |
| 20    | 47               |
| 21    | 91               |
| 22    | 113              |
| 23    | 7                |
| 24    | 2                |

EP 0 241 381 B1

## TABLEAU III

| heures | trafic interne | trafic départ | trafic arrivée | trafic total |
|---|---|---|---|---|
| 1 | 0 | 0 | 0 | 0 |
| 2 | 0 | 0 | 0 | 0 |
| 3 | 0 | 0 | 0 | 0 |
| 4 | 0 | 0 | 0 | 0 |
| 5 | 0 | 0 | 0 | 0 |
| 6 | 0 | 0 | 0 | 0 |
| 7 | 2 | 2 | 3 | 3 |
| 8 | 11 | 13 | 13 | 13 |
| 9 | 45 | 48 | 48 | 48 |
| 10 | 84 | 84 | 85 | 85 |
| 11 | 100 | 100 | 100 | 100 |
| 12 | 96 | 98 | 98 | 98 |
| 13 | 80 | 80 | 80 | 80 |
| 14 | 65 | 65 | 65 | 65 |
| 15 | 73 | 74 | 74 | 74 |
| 16 | 90 | 92 | 86 | 89 |
| 17 | 85 | 87 | 83 | 85 |
| 18 | 79 | 81 | 77 | 79 |
| 19 | 50 | 52 | 53 | 53 |
| 20 | 45 | 47 | 48 | 47 |
| 21 | 89 | 91 | 92 | 91 |
| 22 | 109 | 112 | 104 | 108 |
| 23 | 6 | 7 | 8 | 7 |
| 24 | 1 | 2 | 2 | 2 |

## Revendications

1. Procédé de compression d'un ensemble d'informations formées de n mesures successives sur une première durée prédéterminée d'un signal représentatif du niveau de trafic en un point d'un réseau de télécommunications, l'ensemble desdites mesures étant appelé profil mesuré, procédé caractérisé en ce qu'il consiste d'une part, à créer une bibliothèque de modèles de profil, chaque modèle de profil comprenant n valeurs dites valeurs de référence, et, d'autre part, à normaliser le profil mesuré à comparer ledit profil mesuré à chaque modèle de profil pour déterminer une distance entre ledit profil mesuré et chaque modèle de profil, à comparer ladite distance à un premier seuil, et à remplacer ledit profil mesuré par un couple de valeurs, la première valeur contenant une référence à un modèle de profil pour lequel la distance entre ce modèle de profil et le profil mesuré est inférieure audit seuil et la seconde valeur étant représentative du rapport des amplitudes du profil mesuré et dudit modèle de profil.

2. Procédé selon la revendication 1, caractérisé en ce que chaque modèle de profit de la bibliothèque est normalisé et en ce que chaque profit mesuré est normalisé de la même manière avant d'être comparé aux modèles de profil.

3. Procédé selon la revendication 2, caractérisé en ce que pour tous les profits normalisés, un même niveau normatisé est affecté à la plus forte valeur du profit non-normalisé.

4. Procédé selon la revendication 2, caractérisé en ce que pour tous les profits normalisés, un même niveau normalisé est affecté à une valeur de rang déterminé des valeurs successives formant le profit non-normalisé.

5. Procédé selon l'une quelconque des revendications 1 à 4, caractérisé en ce que la seconde valeur du couple de valeurs remplaçant un profit mesuré est égale au poids du profit mesuré avant normalisation, c'est-à-dire à la somme des valeurs mesurées.

6. Procédé selon l'une quelconque des revendications 1 à 4, caractérisé en ce que la seconde valeur du couple de valeurs remplaçant un profit mesuré est égale au poids d'une valeur de rang déterminé des valeurs successives formant le profil mesuré.

7. Procédé selon l'une quelconque des revendications 2 à 6, caractérisé en ce que la comparaison entre un profil mesuré et un modèle de profil consiste à mesurer l'écart entre chaque valeur du profil mesuré et la valeur de référence de même rang du modèle de profil.

8. Procédé selon la revendication 7, caractérisé en ce que la distance entre le profil mesuré et le modèle de profil est inférieure au premier seuil si chaque écart est inférieur à un second seuil prédéterminé.

9. Procédé selon la revendication 8, caractérisé en ce que le second seuil est une fonction du poids de la valeur de référence qui est comparée à une valeur mesurée.

10. Procédé selon l'une quelconque des revendications 1 à 9, caractérisé en ce que l'on crée, en outre, une bibliothèque de modèles de profit pour une seconde durée prédéterminée, multiple de la première durée prédéterminée, en ce qu'on mesure sur la seconde durée prédéterminée ledit signal représentatif d'un niveau de trafic en un point d'un réseau de télécommunications et en ce qu'on remplace le profil mesuré sur la seconde durée prédéterminée par un couple de valeurs, dans lequel une première valeur note une référence à un modèle de profil pour la seconde durée prédéterminée pour lequel une distance entre ce modèle de profil et le profil mesuré est inférieure à un seuil et dans lequel ta seconde valeur est représentative du rapport des amplitudes du profit mesuré et dudit modèle de profil.

11. Procédé selon la revendication 10, caractérisé en ce que chaque modèle de profil pour la seconde durée prédéterminée est composé de p couples de valeurs, où p est le rapport de durée entre la seconde durée prédéterminée et la première durée prédéterminée, chaque couple étant composé d'un identificateur désignant un modèle de profit pour ta première durée prédéterminée et d'une valeur exprimant le poids dudit modèle de profit pour la première durée prédéterminée dans le modèle de profil pour la seconde durée prédéterminée.

12. Procédé selon la revendication 10, caractérisé en ce que chaque modèle de profit pour la seconde durée prédéterminée est composé du nom d'un taux suivi, et des p valeurs de ce taux dans chacune des p premières durées prédéterminées.

**Claims**

1. Process of compression of a data set formed from successive measurements of a signal representative

EP 0 241 381 B1

of a traffic load at a determined place in a telecommunication network over a first predetermined period, the set of said measurements being called measured profile, a process characterized in that it consists, on the one hand, in creating a library of profile models, each profile model comprising n values called reference values, and, on the other hand, for standardizing the measured profile, in comparing said measured profile with each profile model to determine a distance between said measured profile and each profile model, in comparing said distance to a first threshold, and in replacing said measured profile with a pair of values, the first value containing a reference to a profile model for which the distance between this profile model and the measured profile is less than said threshold and the second value being representative of the ratio of the amplitudes of the measured profile and of said profile model.

2. Process according to claim 1, characterized in that each profile model of the library is normalized and each measured profile is normalized in the same way before being compared with the profile models.

3. Process according to claim 2, characterized in that for all normalized profiles, the same normalized level is assigned to the highest value of the non-normalized profile.

4. Process according to claim 2, characterized in that for all normalized profiles, the same normalized level is assigned to a value of determined rank of the successive values forming the non-normalized profile.

5. Process according to any one of the claims 1 to 4, characterized in that the second value of the pair of values replacing a measured profile is equal to the weight of the measured profile before normalization, i.e. to the sum of the measured values.

6. Process according to any one of the claims 1 to 4, characterized in that the second value of the pair of values replacing a measured profile is equal to the weight of a value of determined rank of the successive values forming the measured profile.

7. Process according to any one of the claims 2 to 6, characterized in that the comparison between a measured profile and a profile model consists in measuring the deviation between each value of the measured profile and the reference value of the same rank of the profile model.

8. Process according to claim 7, characterized in that the distance between the measured profile and the profile model is less than the first threshold if each deviation is less than a predetermined second threshold.

9. Process according to claim 8, characterized in that the second threshold is a function of the weight of the reference value which is compared with a measured value.

10. Process according to any one of the claims 1 to 9, characterized in that there is further created a library of profile models for a second predetermined period, a multiple of the first predetermined period, wherein said signal representative of the traffic load at said predetermined place in said telecommunication network is measured over a second predetermined period and wherein the measured profile over the second predetermined period is replaced with a pair of values, in which a first value designates a reference to a profile model for the second predetermined period for which a distance between this profile model and the measured profile is less than a threshold and in which the second value is representative of the ratio of the amplitudes of the measured profile and of said profile model.

11. Process according to claim 10, characterized in that each profile model for the second predetermined period is composed of p pairs of values, where p is the period ratio between the second predetermined period and the first predetermined period, each pair being composed of an identifier designating a profile model for the first predetermined period and of a value expressing the weight of said profile model for the first predetermined period in the profile model for the second predetermined period.

12. Process according to claim 10, characterized in that each profile model for the second predetermined period is composed of the name of a rate followed, and of the p values of this rate in each of the p first

11

predetermined periods.

**Patentansprüche**

1. Verfahren zur Kompression einer Gruppe von Informationen, die aus n-aufeinanderfolgenden Einheiten bestehen, auf eine erste vorbestimmte Dauer eines Signals, das für die Verkehrsdichte an einem Punkt eines Fernmeldenetzes repräsentativ ist, wobei die genannte Einheitengruppe Meßprofil genannt wird, **dadurch gekennzeichnet,** daß es einesteils daraus besteht, eine Bibliothek aus Profilmodellen zu erzeugen, von denen jedes Profilmodell n-Werte enthält, die Bezugswerte genannt werden, und anderenteils das Meßprofil zu normieren, das Meßprofil mit jedem Modellprofil zu vergleichen, um eine Distanz zwischen dem Meßprofil und jedem Modellprofil zu bestimmen, die genannte Distanz mit einem ersten Schwellenwert zu vergleichen und das Meßprofil durch ein Wertepaar zu ersetzen, von dem der erste Wert einen Bezug zu einen Modellprofil enthält, für das die Distanz zwischen diesem Modellprofil und dem Meßprofil kleiner als der Schwellenwert ist, und der zweite Wert für das Amplitudenverhältnis des Meßprofils zum genannten Modellprofil repräsentativ ist.

2. Verfahren nach Anspruch 1, **dadurch gekennzeichnet,** daß jedes Modellprofil der Bibliothek normiert wird und daß jedes Meßprofil in gleicher Weise normiert wird, bevor es mit den Modellprofilen verglichen wird.

3. Verfahren nach Anspruch 2, **dadurch gekennzeichnet,** daß für alle normierten Profile ein gleicher normierter Pegel auf den Höchstwert des nicht normierten Profils gebracht wird.

4. Verfahren nach Anspruch 2, **dadurch gekennzeichnet,** daß für alle normierten Profile ein gleicher normierter Pegel auf einen Wert der Größenordnung gebracht wird, die von aufeinanderfolgenden Werten bestimmt wird, die das nicht normierte Profil bilden.

5. Verfahren nach einem der Ansprüche 1 bis 4, **dadurch gekennzeichnet,** daß der zweite Wert des Wertepaares, der ein Meßprofil ersetzt, gleich dem Gewicht des Meßprofils vor der Normierung ist, d.h. gleich der Summe der Meßwerte ist.

6. Verfahren nach einem der Ansprüche 1 bis 4, **dadurch gekennzeichnet,** daß der zweite Wert des Wertepaares, der das Meßprofil ersetzt, gleich dem Gewicht eines Wertes der Größenordnung ist, die durch die aufeinanderfolgenden Werte bestimmt wird, die das Meßprofil bilden.

7. Verfahren nach einem der Ansprüche 2 bis 6, **dadurch gekennzeichnet,** daß der Vergleich zwischen einem Meßprofil und einen Modellprofil darin besteht, die Anweichung zwischen jedem Wert des Meßprofils und den Bezugswert gleicher Größenordnung des Modellprofils zu messen.

8. Verfahren nach Anspruch 7, **dadurch gekennzeichnet,** daß der Abstand zwischen dem Meßprofil und dem Modellprofil kleiner als der erste Schwellenwert ist, wenn jede Abweichung kleiner als ein zweiter vorbestimmter Schwellenwert ist.

9. Verfahren nach Anspruch 8, **dadurch gekennzeichnet,** daß der zweite Schwellenwert eine Funktion des Gewichts des Bezugswertes ist, der mit einem Meßwert verglichen wird.

10. Verfahren nach einem der Ansprüche 1 bis 9**, dadurch gekennzeichnet,** daß man weiterhin eine Meßprofilbibliothek für eine zweite vorbestimmte Dauer erzeugt, die ein Mehrfaches der ersten vorbestimmten Dauer ist, und daß man über die zweite vorbestimmte Dauer das die Verkehrsdichte an einem Punkt des Fernmeldenetzes repräsentierende Material mißt, und daß man das Meßprofil über die zweite vorbestimmte Dauer durch ein Wertepaar ersetzt, in dem ein erster Wert einen Bezug zu einem Modellprofil für die zweite vorbestimmte Dauer angibt, für das eine Distanz zwischen diesem Modellprofil und dem Meßprofil kleiner als ein Schwellenwert ist, und in dem der zweite Wert für das Amplitudenverhältnis des Meßprofils zum genannten Modellprofil repräsentativ ist.

11. Verfahren nach Anspruch 10**, dadurch gekennzeichnet,** daß jedes Modellprofil für die zweite vorbestimmte Dauer aus p-Wertepaaren zusammengesetzt ist, wobei p das Zeitdauerverhältnis zwischen der zweiten vorbestimmten Dauer und der ersten vorbestimmten Dauer ist, wobei jedes Paar aus einem Identifizierer, der ein Modellprofil für die erste vorbestimmte Dauer bezeichnet, und einem Wert zusammengesetzt ist, der das Gewicht des genannten Modellprofils für die erste vorbestimmte Dauer in dem Modellprofil für die zweite vorbestimmte Dauer ausdrückt.

12. Verfahren nach Anspruch 10, **dadurch gekennzeichnet,** daß jedes Modellprofil für die zweite vorbestimmte Dauer aus dem Namen eines gefolgten Verhältnisses und aus p-Werten dieses Verhältnisses in jeder der p-ersten vorbestimmten Dauern besteht.

FIG. 1

FIG. 2

EP 0 241 381 B1

FIG. 3

EP 0 241 381 B1

FIG. 4

TRAFIC TOTAL

MODELE DE PROFIL